# EUROPEAN PATENT APPLICATION

(11) **EP 1 594 055 A1**
(43) Date of publication of application: **09.11.2005**
(21) Application number: 04010479.6
(22) Date of filing: 03.05.2004
(51) Int. Cl.: G06F 9/445

(54) **System with application program and method for automatically installing the application program**

(71) Applicant: Aiptek International Inc., Hsin-Chu300, Taiwan (TW)
(72) Inventor: Yeh, Jin-Fu, Jhubei City, Hsinchu County 302 (TW); Tsai, Hsin-Chiem, Hsinchu City 300 (TW)
(74) Representative: Goddar, Heinz J.

(57) **Abstract**

A peripheral apparatus includes an application program. The peripheral apparatus couples to the host system and automatically install the application program into the host system. Thus, the peripheral apparatus of the present invention does not need extra floppy disks or CD-ROM containing the application program. This aspect of the present invention is to avoid intervention for user, e.g., losing the floppy disks or CD-ROM.

## Description

### BACKGROUND OF THE INVENTION

### 1. Field of the Invention

This invention relates to a system with application program and a method for automatically installing the application program to a host, and more particularly to a peripheral apparatus having built-in application program and a method for automatically installing the application program.

### 2. Description of the Prior Art

In general, a computer system connects with various peripheral apparatuses, such as static image capturing device, dynamic image capturing device, digital recorder, printer, pen drive, mobil disk, monitor, motherboard, scanner, mobile phone, projector, mouse, CD-R/CD-RW drive, and intelligent furniture. These peripheral apparatuses connecting with the computer system must have relative application program. The application program is mostly stored in a CD or floppy disks, or downloaded through internet. The installation of the application program is complicated for users.

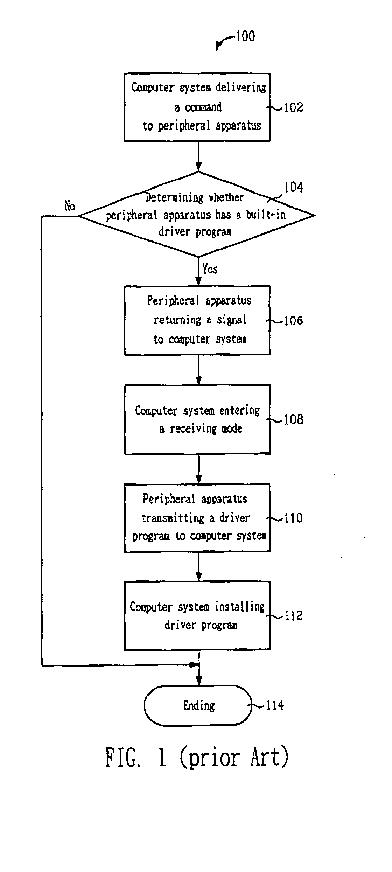

Some conventional peripheral apparatuses have built-in driver program. As shown in FIG. 1, an operating flowchart 100 for installing the driver program comprises the following steps. The step 102 is that a computer system delivers a command to a peripheral apparatus. The step 104 is to determine whether the peripheral apparatus has a built-in driver program. The step 106 is that the peripheral apparatus returns a signal to the computer system. The step 108 is that the computer system enters a receiving mode. The step 110 is that the peripheral apparatus transmits a driver program to the computer system. The step 112 is that the computer system installs the driver program, and the step 114 is to end. The computer system determines whether the peripheral apparatus has the driver program through delivering a command to a peripheral apparatus. If the peripheral apparatus does not have the driver program, the installing process ends. If the peripheral apparatus has the driver program, the peripheral apparatus returns the signal to the computer system and the computer system enters a receiving mode. The peripheral apparatus transmits the driver program to the computer system and then the driver program is installed. Accordingly, the operating process is only to achieve the purpose of driving the peripheral apparatus, and does not have other function.

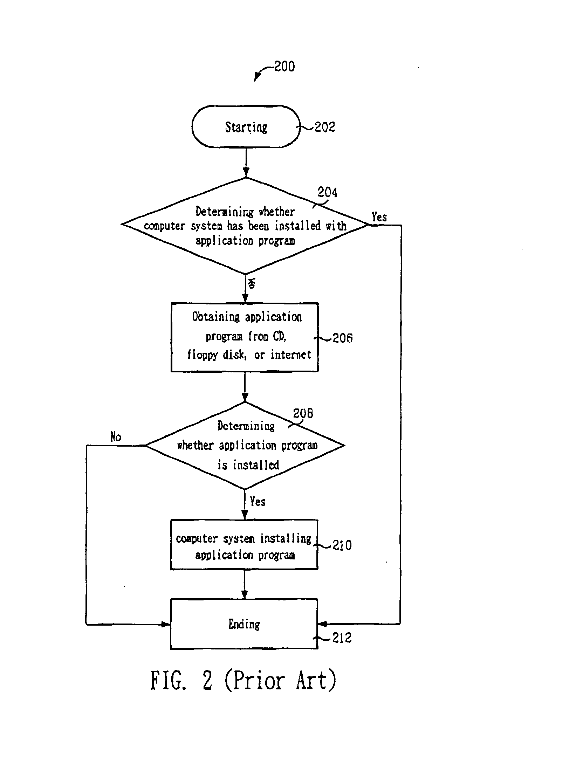

Referring to FIG. 2, an operating flowchart 200 for installing an application program comprises the following steps. The step 202 is to start. The step 204 is to determine whether the computer system has been installed with an application program. The step 206 is to obtain the application program from a CD, floppy disks, or internet. The step 208 is to determine whether the application program is installed. The step 210 is that the computer system installs the application program, and the step 212 is to end. The computer system determines whether the application program of the peripheral apparatus is installed through delivering a determining signal. If the application program has been installed, the installing process ends. If the application program is not installed yet, the application program can be obtained from CD, floppy disks, or internet. Next, users determine whether the application program is installed. The application program is installed and the installing process ends if the users select to install the application program. Alternatively, the application program is not installed and the installing process ends if the users select to not install the application program.

Recently, the operating system (OS) determines whether the relative application program is installed through receiving a signal form the peripheral apparatus. If the application program is installed, the operating system immediately uses the application program. If the application program is not installed yet, the operating system has to install the application program with the attached CD or floppy disks containing the application program.

The problems of storing or managing the CD or floppy disks occur if installing the application program through CD or floppy disk. That is because the computer system connects with various peripheral apparatuses and these peripheral apparatuses have respective application program. These application programs may be stored in a CD or respective CDs, and thus the user easily confuses with these CDs or easily loses these CDs.

In addition, when a peripheral apparatus connects with another computer system, the attached CD or floppy disks containing the application program must be installed through floppy drive, CD-ROM drive, or internet. During the installing process, the user must search the CD or floppy disks and confirm that the CD or floppy disks contain the application program for avoiding installing matterless application program. Alternatively, the user must know the type of the peripheral apparatus and then download the proper application program to install. The steps mentioned above are not easy for a general user.

On the operating system platform of Microsoft windows, the application program provided by the operating system platform cannot support all peripheral apparatuses or the application program is not installed yet on the operating system platform. Therefore, the CD containing the Microsoft windows has to be put into CD-ROM drive again to install the proper application program when the peripheral apparatus connects with the computer system. The proper application program may be not stored in the CD because the operating system platform is too old, and the user must obtain the proper application program through internet.

### SUMMARY OF THE INVENTION

In those conventional arts, the installing process has problems mentioned above and makes the user inconveniently and wasting time to search and download the application program through internet.

One of objectives of the present invention is to provide a peripheral apparatus having application program therein to simplify the installing process.

Another objective of present invention is to provide a peripheral apparatus having application program therein to reduce the inconvenience of losing or breaking the CD/floppy disks.

A further objective of present invention is to provide a peripheral apparatus having application program therein to immediately install proper application program.

Another objective of the present invention is to provide a moving convenience. The peripheral apparatus connects other computer system and the application program can immediately be installed in the computer system when a proper application program is not installed in the computer system.

A further objective of present invention is to provide a non-volatile memory capable of updating data stored therein. The using convenience of the peripheral apparatus can be increased through updating the application program.

An additional objective of present invention is to provide functions of immediately installing and PnP (plug and play) by a method of automatically installing application program into a host.

As aforementioned, the present invention provides a system with application program. The system comprises a peripheral apparatus connecting to a host and an application program for using said peripheral apparatus. The application program is stored in a non-volatile memory of the peripheral apparatus and is automatically installed into the host after the peripheral apparatus connecting to the host.

The present invention also provides a method for automatically installing application program of a peripheral apparatus into a host. The method comprises the following steps. First, the peripheral apparatus is connected to the host. The application program stored in a non-volatile memory of the peripheral apparatus is transmitted to the host. Finally, the application program is installed into the host.

### BRIEF DESCRIPTION OF DRAWINGS

FIG. 1 shows an operating flowchart of a built-in driver program in the conventional arts;
FIG. 2 shows an installing flowchart of application program in the conventional arts;
FIG. 3 shows a block diagram of a peripheral apparatus according to the present invention;
FIG. 4 is a schematic diagram of the computer system connecting to peripheral apparatuses according to the present invention; and
FIG. 5 is an operating flowchart of an application program transmitting to a host. according to the present invention.

### DESCRIPTION OF THE PREFERRED EMBODIMENT

Some sample embodiments of the invention will now be described in greater detail. Nevertheless, it should be recognized that present invention can be practiced in a wide range of other embodiments besides those explicitly described, and the scope of the present invention is expressly not limited expect as specified in the accompanying claims.

Then, the components of the different elements are not shown to scale. Some dimensions of the related components are exaggerated and meaningless portions are not drawn to provide a more clear description and comprehension of the present invention.

A peripheral apparatus according to the present invention is capable of connecting to a host. The host can be a computer system, a server, a personal computer, and so on. The peripheral apparatus can be a digital camera, a printer, a mobil disk, a digital video camcorder, a digital recorder, a fax, a PDA (Personal Digital Assistant), a scanner, a mobile phone, a projector, a mouse, a CD-R/CD-RW drive, an intelligent furniture, and so on. A method according to the present invention is to assist in operation of the peripheral apparatus. The method is to store an application program in the peripheral apparatus. The application program is transmitted to the host and installed in the host for assisting in operation of the peripheral apparatus.

The application program is capable of processing data or assisting in operation of the corresponding peripheral apparatus. For example, an application program of a digital camera can modify or paste a picture, or compress a file. The peripheral apparatus have a non-non-volatile memory therein storing an application program, and the host can be installed with the application program to use the peripheral apparatus. The non-volatile memory is capable of erasing and writing, so the application program can be updated by transmitting a newer application program into the non-volatile memory. The peripheral apparatus can connect with the host through a wire or wireless apparatus.

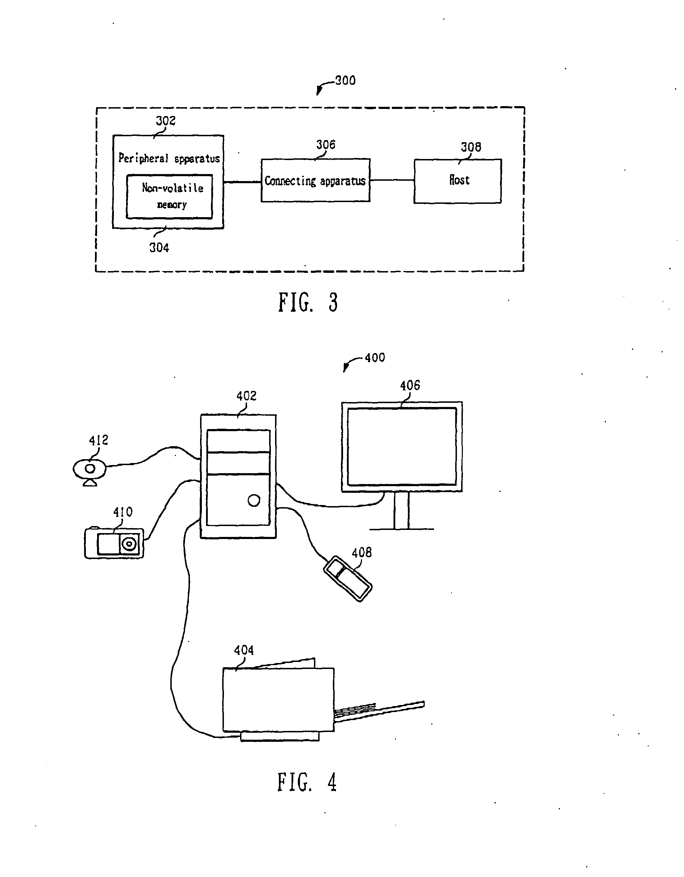

The present invention provides a peripheral apparatus having a built-in application program, as shown in FIG. 3. A system 300 comprises a peripheral apparatus 302, a non-volatile memory 304, a connecting apparatus 306, and a host 308. The peripheral apparatus 302 is the main element of the system. The peripheral apparatus 302 can be a digital camera, digital video camcorder, a PDA, a scanner, a monitor, a printer, a mobile telecommunication apparatus, a pen drive, a mobil disk, a walkman, a digital recorder, and so on. The host 308 is employed to operate the peripheral apparatus, and receives application program corresponding to the peripheral apparatus from the non-volatile memory 304. The connecting apparatus 306 is employed to connect the peripheral apparatus 302 and the non-volatile memory 304.

The application program of the peripheral program is stored in the non-volatile memory 304. The peripheral apparatus 302 and the non-volatile memory 304 connect the host 308 to communicate with each other through the connecting apparatus 308. The connecting apparatus 306 can be USB (Universal Serial Bus), wireless network, wire network, and so on. The non-volatile memory 304 can be ROM (read only memory), SD (Secure Digital) card, MS (Memory Stick) card, flash memory, MMC (Multi Media Card) card, CF (Compact Flash) card, and so on.

Referring to FIG. 4, it shows a schematic diagram of a computer system 402 connecting to various peripheral apparatuses comprising a printer 404, a displaying apparatus 406, a pen drive/mobile disk 408, a digital camera 410, and a web camera 412. According to the present invention, each of the peripheral apparatuses has respective application program. Thus, each of the peripheral apparatuses can immediately operating by only connecting the host 402. For example, the application program stored in the digital camera 410 can be installed into the host 402 when connecting the digital camera 410 with the host 402. When the application program has been installed in the host 402, the captured data in the digital camera 410 can be transmitted into the host 402 and modified through the application program, e.g., modifying the picture data, processing video data, and compressing file. Hence, the peripheral apparatus according to the present invention can operate without installing a corresponding application program through a CD, floppy disks, or internet, and it is convenient for users.

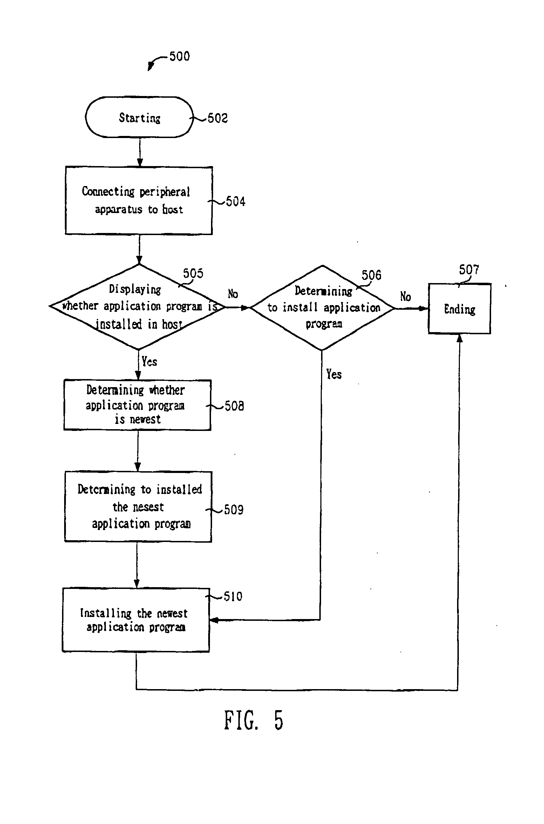

Referring to FIG. 5, it shows an operating flowchart of an application program transmitting to a host. The operating flowchart 500 comprises the following steps. The step 502 is to start and the step 504 is to connect a peripheral apparatus to a host. The step 505 is to display whether the application program is installed in the host. The step 506 is to determine whether the application program is to be installed. The step 507 is to end. The step 508 is to determine whether the application program installed in the host is the newest application program. The step 509 is to determine whether the newest application program is to be installed. The step 510 is to install the newest application program. The 511 is to install the application program. After the peripheral apparatus connecting the host, the user can determine whether the host is installed with the application program through a displaying signal on the host. If the displaying signal means that the application program is not installed yet, the user can optionally install the application program. If the user determines to not install the application program, the installing process ends. On the contrary, if the user determines to install the application program, the application program is installed and then the installing process ends. However, if an application program has been installed in the host and the application program in the peripheral apparatus is newer than that in the host, the host will provide a displaying signal to make the user know the condition and determine whether the application program on the host is updated. If the user determines to update the application program on the host, the host will be installed with the application program on the peripheral apparatus and the installing process ends. If the user determines to not update the application program on the host, the installing process ends.

The installing process mentioned above, the user does not need to put CD or floppy disks into the CD-ROM drive or the floppy drive, even connect to the internet to download the application program. Hence, the convenience for user can be increased according to the installing process of the present invention.

The main advantages of the present invention are described below. The user does not need to manage the CD or floppy disks, so the user does not confuse with various CDs or floppy disks attached with various peripheral apparatuses. Moreover, the user does not easily install wrong application program and does not waste time to search and download the application program in the internet. Hence, the present invention provides the convenience of PnP (plug and play) and the user can economize on time during the installing process of the application program.

Although specific embodiments have been illustrated and described, it will be obvious to those skilled in the art that various modifications may be made without departing from what is intended to be limited solely by the appended claims.

The features disclosed in the foregoing description, in the claims and/or the accompanying drawings may, both separately and in any combination thereof, be material for realising the invention in diverse forms thereof.

## Claims

1. A system with application program, comprising:
a peripheral apparatus connecting to a host; and
an application program for using said peripheral apparatus, said application program being stored in a non-volatile memory of said peripheral apparatus and being automatically installed into said host after said peripheral apparatus connecting to said host.

2. The system according to claim1, wherein said host is a notebook computer, a desktop computer, a mobile phone, or a PDA.

3. The system according to claim 1 or claim 2, wherein said peripheral apparatus is a fax, a digital camera, a digital video camcorder, or a digital recorder.

4. The system according to claim 1, wherein said non-volatile memory is a ROM, a flash memory, a MS card, a MMC card, a SD card, or a CF card.

5. A method for automatically installing application program of a peripheral apparatus into a host, comprising the steps of:
connecting said peripheral apparatus to said host;
transmitting said application program stored in a non-volatile memory of said peripheral apparatus to said host; and
installing said application program into said host.
